# EUROPEAN PATENT SPECIFICATION

(11) **EP 3 054 776 B1**
(45) Date of publication and mention of the grant of the patent: **13.06.2018**
(21) Application number: 14777317.0
(22) Date of filing: 30.09.2014
(51) Int. Cl.: A23D 7/00, A23D 7/01, A23D 7/005, A23D 7/04

(54) **PROCESS FOR PREPARING EMULSIFIER-FREE EDIBLE FAT-CONTINUOUS EMULSIONS**
VERFAHREN ZUR HERSTELLUNG VON EMULGATORFREIEN, ESSBAREN, FETTKONTINUIERLICHEN EMULSIONEN
PROCÉDÉ POUR PRÉPARER DES ÉMULSIONS À BASE DE GRAISSE COMESTIBLE SANS ÉMULSIFIANT

(30) Priority: 07.10.2013 EP 13187528
(43) Date of publication of application: 17.08.2016
(73) Proprietor: UNILEVER N.V., 3013 AL Rotterdam (NL); Unilever BCS Europe B.V., 3013 AL Rotterdam (NL); Unilever PLC, London EC4Y 0DY (GB); Unilever BCS Limited, London, EC4Y 0DY (GB)
(72) Inventor: ADEL, Rudi den, NL-3133 AT Vlaardingen (NL); DOL, Georg Christian, NL-3133 AT Vlaardingen (NL); GREBENKÄMPER, Kai, NL-3133 AT Vlaardingen (NL); LEENHOUTS, Abraham, NL-3133 AT Vlaardingen (NL); POTMAN, Ronald Peter, NL-3133 AT Vlaardingen (NL); SMIT-KINGMA, Irene Erica, NL-3133 AT Vlaardingen (NL); TIO, Farley Ferdinand, NL-3133 AT Vlaardingen (NL)
(74) Representative: Corsten, Michael Allan
(86) International application number: PCT/EP2014/070847
(87) International publication number: WO 2015/052037

(56) References cited:
- WO-A1-2005/014158
- WO-A1-2011/134627
- WO-A1-2011/144405
- WO-A1-2012/079957
- WO-A1-2012/084438

## Description

### Field of invention

The present invention relates to a process for the preparation of an edible fat continuous emulsion comprising the use of fat powder comprising hardstock fat and hardstock fat in liquid form, which emulsions do not contain appreciable levels of non-lecithin emulsifier. Furthermore, the invention relates to emulsions comprising 40 to 75 wt. % of a dispersed water-phase and 25 to 60 wt. % of total fat and which do not contain appreciable levels of non-lecithin emulsifier. More specifically, such emulsions are spreads.

The invention is defined by the claims.

### Background of invention

Edible fat-continuous emulsions like e.g. margarine and low fat spreads are well known food products that comprise a continuous fat-phase and a dispersed water-phase (a.k.a. water-in-oil emulsions or W/O emulsions).

Margarine is generally defined as a composition containing at least 80 wt. % of fat and about 20 wt. % of a water-phase. In contrast, emulsions containing less than 80 wt. % fat are generally called spreads. Nowadays the terms margarine and spread are often used interchangeably although in some countries the commercial use of the term margarine is subject to certain regulatory requirements. The main difference between margarine and spread is the amount of fat and the hardness of the product, e.g. as expressed by a Stevens value.

The fat-phase of spreads and similar edible fat-continuous emulsions comprises a mixture of liquid oil (i.e. fat that is liquid at ambient temperature) and fat which is solid at ambient temperature. The liquid oil fraction typically comprises liquid unmodified vegetable oil such as soybean oil, sunflower oil, linseed oil, low erucic rapeseed oil (Canola), corn oil (maize oil) and blends of vegetable oils.

The solid fat, also called structuring fat or hardstock fat, serves to structure the fat-phase by forming a fat crystal network throughout the continuous oil-phase. It also helps to stabilize the emulsion. The droplets of the water-phase are fixed within the spaces of the lattice of solid fat crystals. This prevents coalescence of the droplets and separation of the heavier water-phase from the fat-phase.

Processes have been disclosed to manufacture emulsions wherein the structuring fat is added as fat powder (i.e. pre-crystallized fat). An example of such a process can be found in WO2010/069752.

Generally, edible emulsions made using fat powder (i.e. pre-crystallized fat) are prepared according to the following steps:
a. mixing of fat powder and liquid oil to provide a slurry;
b. providing a water-phase;
c. mixing the slurry and the water-phase to form a fat-continuous emulsion,
wherein the fat-powder is typically not subjected to a temperature at which the fat powder will substantially melt.

A commonly used type of fat powder is micronized fat powder, which is for example obtainable by a Super Critical Melt Micronisation process, as described in J. of Supercritical Fluids 43 (2007) 181-190 and EP1651338.

WO2011/160921 relates to edible fat powders and the use of such edible fat powders to prepare fat continuous emulsions.

Another general process for the manufacture of emulsions which is the so-called votator or churn process, which encompasses the following steps:
1. Mixing of the liquid oil, the structuring fat and if present the water-phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

One of the benefits of the use of fat powder for emulsions, in comparison with the votator (e.g. requiring A-units, scraped surface heat exchangers) or churn process (see below) is a reduction in energy requirement, a broader range of fat suitable as hardstock fat and that it allows a reduction in SAFA.

Yet a third process for manufacturing for water in oil emulsions such as margarines is disclosed in GB 1327511. Herein a process is disclosed in which a first liquid fat, containing hydrogenated palm oil having a mp of 45°C, is mixed with an emulsion of oil and water and emulsified in an emulsifying unit.

Generally, spreads produced with either of these methods contain oil, a structuring fat, water, emulsifiers such as mono- and/or diglycerides, and optionally a (dairy) protein and/or thickener and/or lecithin (next to optional ingredients like flavours, colours, salt, acidulants). Emulsifiers such as mono- and diglycerides provide both emulsion stability (e.g. of the finished product) as well as that it facilitates the emulsion being formed.

For reasons of consumer appeal, however, it is desired to be able to produce emulsions such as spreads that do not require the use of emulsifiers having a more or less chemical appeal with the consumer (whether justified or not), such as mono- and/or diglycerides, polyglycerol esters of fatty acids (e.g. PGPR, polyglycerol polyricinoleate), sucrose esters, yet which emulsions have sufficient emulsion stability and which emulsions perform more or less conventional on criteria (for spreads) such as one or more of spreadability, flavor (and salt) release, health profile, melting behaviour. In general, there is a desire for emulsions such as spreads that contain as few as possible ingredients, especially those that are regarded by many consumers as food additives, like thickeners and preservatives. Native lecithin, and derivatives like fractionated lecithin and hydrolysed lecithin suffer less from the image of being a chemical food additive.

EP 390947 discloses a method for making spreads (15-50% fat) without emulsifiers and without stabilizers, but which spreads require protein for emulsification.

WO 2011/144405 discloses a fat spread comprising two different emulsifiers (one being a water soluble biopolymer and the other being an oil soluble emulsifier) and 0.1-20% of plant sterol particles and a process to prepare such, The process comprises the steps of preparing an aqueous dispersion comprising plant sterol particles and part of the water-soluble emulsifier, and the addition of said dispersion to a fat phase or a water in oil emulsion.

### Summary of the invention

Thus, there is a need for spreads that do not contain appreciable amounts of one or more of the following emulsifiers: mono- and diglycerides, polyglycerol esters of fatty acids or sucrose esters, yet which emulsions perform well on criteria as emulsion stability, spreadability, plasticity or firmness (being a spread, e.g. for spreading on bread or toast), mouthfeel, taste and flavor release. As lecithin and lecithin derivatives are seen as fairly natural ingredients (native lecithin is even used as dietary supplement) use of these emulsifiers is found to be acceptable for the present purpose. There is also a need for a process which can be used to manufacture such on an industrial scale.

It was found that one or more of the above objectives is achieved by a process for a process for manufacturing edible fat-continuous emulsions comprising 25 to 60 wt. % of total fat (weight % on total emulsion) and 40 to 75 wt. % of a dispersed water-phase (weight % on total emulsion), said process comprising the steps of:
a) providing a water-phase;
b) providing liquid oil;
c) providing fat powder comprising hardstock fat (A);
d) providing hardstock fat (B) in liquid form;
e) mixing liquid oil which is at a temperature of 1-15°C with 0.3-20% the hardstock fat (B) in liquid form (% by weight on total fat of the emulsion), said hardstock fat (B) being at a temperature above its melting point;
f) mixing the product of e) which is at a temperature of 10-30°C with 3-20% of the fat powder comprising hardstock fat (A) (% by weight based on total fat of the emulsion) to obtain a fat slurry;
g) mixing the oil-slurry obtained by step f) with the water-phase to provide a water-in-oil emulsion;
wherein the amount of non-lecithin emulsifier in the emulsion is less than 0.1 wt. %, based on weight of the total emulsion, and wherein the composition further comprises lecithin and/or a lecithin derivative in an amount of 0.05 to 0.4% by weight based on the total emulsion.

Surprisingly it was found that the process according to the invention allows the manufacture of (plastic) water in oil emulsions that are spreadable (i.e. spreads), that have low to medium fat levels, and which can be made without emulsifiers such as mono- and/or diglycerides.

Therefore, in a second aspect, the invention relates to an edible fat-continuous emulsion, which emulsion comprises:
- 25 to 60 wt. % of total fat, based on the total emulsion;
- 40 to 75 wt. % of a dispersed water-phase, based on the total emulsion;
- 0.05 to 0.4 wt. % lecithin and/or a lecithin derivative, preferably between 0.07 and 0.35 wt. %, based on the total emulsion;
- less than 0.05 wt. % protein, preferably less than 0.01 wt. % protein, even more preferably less than 0.005wt. % protein, based on the total emulsion;
- less than 0.1 wt. % of thickener or hydrocolloid, preferably less than 0.05wt. % of thickener or hydrocolloid, based on the total emulsion;
- less than 0.05 wt. % of a non-lecithin emulsifier, based on the total emulsion,
and wherein the emulsion is a spread having a Stevens value below 250, preferably below 220, below 200.

As an additional benefit of the present invention, it was found that the water phase can be fairly "empty", in that components often added and having impact on the structure and/or stability, such as proteins and/or thickeners such as starch or gums can be omitted, yet good products could be made. This in turn means that there is less need for a preservative like sorbate. This all leads to products with a reduced list of ingredients to be declared on pack, which is perceived by consumers as natural, or preferred.

### Detailed description of the invention

Weight percentage (wt. %) is based on the total weight of the composition unless otherwise stated.

The terms 'fat' and 'oil' are used interchangeably. The terms 'firmness' and 'hardness' are used interchangeably. The terms 'water-in-oil emulsion', 'W/O emulsion' and 'fat-continuous emulsion' are used interchangeably. Hardstock fat is an oil or fat which has at least 5% solids at a temperature of 20°C. Liquid oil is an oil or fat which has less than 5% solids at a temperature of 20°C.

"Lecithin and/or lecithin derivative" is herein to be understood as to relate to: native lecithin, hydrolysed lecithin, fractionated lecithin, irrespective of the source (e.g. bean oil, sunflower oil, egg, or other).
"Non-lecithin emulsifiers" is herein to be understood as food grade emulsifiers that are not lecithin or derived from lecithin. The group of non-lecithin emulsifiers encompasses monoglycerides of fatty acids, diglycerides of fatty acids, sucrose esters, polyglycerol esters of fatty acids (including PGPR), organic acid esters of monoglycerides.

The process according to the current invention comprises providing a water-phase, liquid oil, fat powder comprising hardstock fat and hardstock fat in liquid form.

### Hardstock fat in liquid form

The process according to the invention comprises the step of providing hardstock in liquid form. This is to be understood as providing hardstock which is at least substantially liquid, preferably completely liquid, before coming into contact, preferably at the moment of contact, with at least part, preferably all, of the other ingredients such as the liquid oil.

Hardstock can be liquid for example by having an elevated temperature (i.e. well-above ambient temperature, such as 60°C), by existing in a supersaturated state and/or by the activity of a solvent, such as an organic solvent.

Conveniently, the hardstock in liquid form is melted hardstock, when added to the liquid oil. It will be appreciated that the hardstock in liquid form, in combination with liquid oil, is preferably sufficiently cool, before coming into contact with fat powder to prevent a substantial part of the fat powder from melting. For example, if necessary, the hardstock in liquid form is cooled by a heat exchanger and/or by mixing with any remaining part of the liquid oil, wherein said remaining part of the liquid oil has a sufficiently low temperature.

### Fat powder

The fat powder comprises hardstock fat and preferably comprises at least 80 wt. % of hardstock fat, more preferably at least 85 wt. %, even more preferably at least 90 wt. %, even more preferably at least 95 wt. % and even more preferably at least 98 wt. %. Still even more preferably the edible fat powder essentially consists of hardstock fat.

The hardstock fat as present in the edible fat powder has a solid fat content N10 from 50 to 100, N20 from 26 to 95 and N35 from 2 to 60.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190, EP1651338 and WO2005/014158. The fat powder comprising hardstock fat is preferably prepared by supercritical melt micronisation

The process according to the invention is especially beneficial when used with fat powder that has been prepared using a ScMM process. Preferably the fat powder used in the process according to the invention is micronized fat powder and more preferably is micronized fat powder obtainable by supercritical melt micronisation.

However, other types of fat powder may also be employed in the present invention, such as for example fat powders obtained by cryogenic cooling, e.g. as described in EP 1114674 or WO 2012/041682. Without wishing to be bound by theory, it is believed that the fat powder acts as initiator of crystallisation kernel or initiator for the hardstock fat in liquid form. This may occur quickly after the mixing in of the hardstock in liquid form, or may occur more slowly, after step g) in the present process, even well thereafter, during storage of the emulsion prepared. In principle, any fat powder may do so. Preferably, however, the fat powder is the fat powder as described in the two paragraphs above (on the ScMM process), as such may yield a very finely divided fat powder (thus e.g. giving many possible crystallisation kernels for the liquid hardstock).

For implementation of the process on factory scale, it is preferred that in the process according to the invention at most three, more preferably at most two and even more preferably only one type of fat powder is used. Furthermore, to facilitate implementation of the process on factory scale, the hardstock comprised by the fat powder is simple and preferably is made of at most three, more preferably at most two and even more preferably a single source of hardstock.

### Composition and amount of hardstock

The composition of the hardstock fat comprised by the fat powder and the composition of the hardstock fat in liquid form may differ, or may be the same. The hardstock fat, as comprised by the fat powder and as added in liquid form, may each be a single fat or a mixture of different fats. Said hardstock fats may be of vegetable, animal or marine origin. The hardstock or emulsions according to the invention generally may comprise conventional oils and fats which may be of both animal and vegetable origin. Examples of sources of conventional oils and fats include, optionally fractions of, coconut oil, palmkernel oil, palm oil, marine oils, lard, tallow fat, butter fat, soybean oil, safflower oil, cotton seed oil, rapeseed oil, poppy seed oil, corn oil, sunflower oil, olive oil, algae oil and blends thereof. For the purpose of this invention, algae oils are considered vegetable oils.

Preferably the hardstock in liquid form is selected from the list, including fractions and interesterified mixtures thereof, consisting of butter fat, cacao butter, shea oil, palm oil, palm kernel oil, coconut oil and blends thereof.

Hydrogenation may be used to alter the degree of unsaturation of the fatty acids and as such to alter the fatty acid composition. A drawback of hydrogenation, especially of partial hydrogenation, is the formation of by products like e.g. trans fatty acids. Preferably the emulsion of the invention comprises hardstock which does not contain partially hydrogenated fats. If hydrogenation is applied for hardstock fats full hydrogenation is preferred, such as rape seed oil hydrogenated to RP70, or RPhe70. Preferably the emulsion of the invention comprises only natural fats. Preferably at least 50 wt. % of the hardstock fat (based on total amount of hardstock fat) is of vegetable origin, more preferably at least 60 wt. %, even more preferably at least 70 wt. %, even more preferably at least 80 wt. %, even more preferably at least 90 wt% and even more preferably at least 95 wt. %. Still even more preferably the hardstock fat essentially consists of hardstock fat of vegetable origin.

The composition of the hardstock fat comprised by the fat powder and the composition of the hardstock fat in liquid form may influence the characteristics of the W/O emulsion products, such as stability, glossiness and hardness.

In particular, it was found that when in the process according to the invention the hardstock fat comprised by the fat powder has the following solid fat profile:

| | |
|---|---|
| N20 | from 65 to 95; |
| N35 | from 25 to 55; |

preferably has the following solid fat profile:

| | |
|---|---|
| N20 | from 70 to 90; |
| N35 | from 30 to 50; |

more preferably has the following solid fat profile:

| | |
|---|---|
| N20 | from 75 to 85; |
| N35 | from 35 to 45; |

and even more preferably, the hardstock fat comprised by the fat powder is an interesterified mixture of 65% dry fractionated palm oil stearin with an Iodine Value of 14 and 35% palm kernel oil; it results in emulsions having an excellent glossy appearance of a good firmness.

In particular, it was found that when in the process according to the invention the hardstock fat in liquid form has the following solid fat profile:

| | |
|---|---|
| N20 | from 5 to 90; |
| N30 | below 60; |

preferably has the following solid fat profile:

| | |
|---|---|
| N20 | from 10 to 80; |
| N30 | below 30; |

more preferably has the following solid fat profile:

| | |
|---|---|
| N20 | from 15 to 70; |
| N30 | below 20; |

even more preferably has the following solid fat profile:

| | |
|---|---|
| N20 | from 25 to 65; |
| N30 | below 10; |

and still even more preferably is palm kernel fat (i.e. fully hydrogenated palm kernel oil), coconut oil or a combination thereof; it results in emulsions having an excellent glossy appearance of a good firmness.

Addition of a greater amount of liquid hardstock, in the process according to the invention, typically results in emulsions with an increased hardness (i.e. firmness), as measured in Stevens value.

In the process and product according to the present invention, it is preferred that the total amount of hardstock fat (i.e. from fat powder and from liquid hardstock) is from 5 to 30 wt. %, preferably from 7 to 25 wt. %, more preferably from 8 to 22 wt. % by weight, based on the total fat phase. In the process and product of the present invention it is preferred that the amount of fat powder comprising hardstock fat which is added (as powder), is from 5 to 15 wt. %, preferably from 8 to 12 wt. %, based on the weight of total fat phase.

In the product and process of the present invention, it is preferred that the amount of hardstock fat that is added in liquid form is from 0.5 to 15 wt. %, preferably from 1 to 14 wt. %, more preferably from 2 to 12 wt. % and even more preferably from 2 to 10 wt. %, based on the weight of total fat phase.

### Water-phase

The water-phase is prepared according to the standard way in accordance with the chosen ingredients. The water-phase of the emulsion may suitably contain a variety of food grade ingredients, such as sodium chloride, acidulant, preservative, water-soluble flavoring, minerals and water-soluble vitamins. The water-phase may also comprise liquid oil, for example to aid the inclusion of hydrophobic ingredients in the water-phase.

### Liquid oil

The liquid oil used in the process according to the invention may be a single oil or a mixture of different oils, and may comprise other components. Preferably at least 50 wt. % of the oil (based on total amount of oil) is of vegetable origin, more preferably at least 60 wt. %, even more preferably at least 70 wt. %, even more preferably at least 80 wt. %, even more preferably at least 90 wt. % and even more preferably at least 95 wt. %. Still even more preferably the oil essentially consists of oil of vegetable origin. The liquid oil fraction preferably comprises unmodified vegetable oil such as soybean oil, sunflower oil, linseed oil, low erucic rapeseed oil (Canola), corn oil (maize oil), olive oil, algae oil and blends of vegetable oils. For the purpose of this invention algae are considered vegetables.

In the process and composition according to the present invention, commonly the liquid oil, the liquid hardstock, and the fat powder comprising hardstock provide all the fat and oil in such composition. Margarines and other wrapper-type water in oil emulsions for food use typically have 60-85% fat. For dietary reasons and for consumer appeal, the water in oil emulsions of the present invention (e.g. spreads) are products having 25-60% fat. In the process and composition according to the present invention, it is preferred that the total amount of fat (i.e. liquid oil + hardstock fat from either source), is preferably from 30 to 55%, preferably from 35 to 50%, more preferably from 40 to 50%), in weight % on total emulsion.

### Other components

In the composition and process of the invention, it is preferred that the emulsion comprises lecithin and/or a lecithin derivative in an amount of between 0.07 and 0.35 wt. %, preferably of between 0.1 and 0.3 wt. % based on weight of the total emulsion. In the present invention, the lecithin and/or lecithin derivative is preferably native lecithin. Hence, it is preferred that the emulsion comprises native lecithin in an amount of between 0.07 and 0.35 wt. %, preferably of between 0.1 and 0.3 wt. % based on weight of the total emulsion. The (native) lecithin and/or a lecithin derivative performs two roles: it facilitates forming an emulsion, and as such facilitates manufacturing, and for the emulsion prepared it promotes good flavor and salt release in the mouth. Low levels of lecithin may lead to a flavor and salt release which is not optimal, high levels may lead to difficulties in emulsion formation. In this invention, use of native lecithin is preferred.

Lecithin (and lecithin derivative) is an emulsifier, and preferably a product is prepared in which non-lecithin emulsifiers (emulsifiers other than lecithin) are not added, but that does contain lecithin and/or lecithin derivative.. As said, it was found that with the process of the present invention, water-in-oil emulsions can be prepared, especially spreads, that do not require addition of a non-lecithin emulsifier. Hence, it is preferred, in the composition and process of the present invention, that the amount of non-lecithin emulsifier in the emulsion is less than 0.05 wt. %, preferably less than 0.01wt. %, more preferably less than 0.005 wt. % , most preferably less than 0.001wt. % based on the total emulsion. Even more preferably, the emulsions produced with the process according to the present invention contain less than 0.05 wt. %, preferably less than 0.01wt. %, more preferably less than 0.005 wt. % , most preferably less than 0.001wt. % based on the total emulsion of monoglycerides, diglycerides, and PGPR.

An ingredient commonly used in water-in-oil edible emulsions like spreads is protein, especially dairy protein. However, as the products of the present invention are prepared without non-lecithin emulsifiers, and as it is preferred that the list of declarable ingredients is low, it is preferred that in the process and product of the present invention the emulsion comprises less than 0.05 wt. % protein, preferably less than 0.01 wt. % protein, even more preferably less than 0.005wt. % protein, based on the total emulsion. In this connection, it is preferred that in the process and product of the present invention the emulsion comprises less than 0.05 wt. % dairy protein, preferably less than 0.01 wt. % dairy protein, even more preferably less than 0.005wt. % dairy protein, based on the total emulsion. Typical examples of such dairy protein are whey protein, whey protein components, concentrates and isolates, caseinates, and mixtures thereof.

It was surprisingly found that the emulsions according to the present invention, made without adding non-lecithin emulsifiers, do not require stabilizers or thickeners which are common in (low fat) emulsions such as spread. This has the added benefit that the list of declarable ingredients on such packaged food products is reduced. Hence, in the composition and process according to the present invention it is preferred that the emulsion comprises less than 0.1 wt. % of thickener or hydrocolloid, preferably less than 0.05wt. % of thickener or hydrocolloid, by weight based on the total formulation, based on the total emulsion. Typical examples of such thickeners or hydocolloids are starch, gums like alginate, and others. Thus, it is preferred that the emulsions produced by the process according to the present invention comprise less than 0.1%, more preferably less than 0.05% by weight based on the total formulation, of starch or starch-component like flour.

### Mixing

In the process according to the present invention, the order of steps is that first the liquid oil and hardstock in liquid form are mixed. In this, it is preferred that the hardstock fat in liquid form when being mixed in step e) with the liquid oil is at a temperature of at least 50°C, more preferably at least 60°C and even more preferably at least 70°C. Preferably, it is above the melting point of the liquid hardstock. The oil, on the other hand, to which the liquid hardstock is added and with which it is mixed preferably has a temperature of below the melting point of the liquid hardstock. For good structuring, the temperatures of the liquid hardstock and the liquid oil in the process of the present invention are chosen such that the temperature of the oil combined with liquid hardstock after step e) is from 5 to 25°C, preferably from 8 to 23°C and more preferably from 10 to 22°C. This also prevents or limits melting of the hardstock added as part of the fat powder. Preferably mixing of liquid oil and liquid hardstock is effected by high shear mixers.

After preparing the mix of liquid oil with liquid hardstock, this is mixed with the fat powder comprising hardstock. It is important that the fat powder is not subjected to temperatures at which the hardstock fat comprised by the fat powder melts as this severely reduces the ability of the fat powder to structure. This temperature depends on the hardstock fat comprised by the fat powder and can routinely be determined for example based on the solid fat content profile (i.e. N-lines) of the hardstock fat used. Preferably the fat powder, after production, has not been subjected to temperatures at which a substantial part of the fat powder melts and more preferably has not been subjected to above 25, more preferably above 15, even more preferably above 10 degrees Celsius. Hence, it is preferred that in the process of the present invention, to avoid or reduce the hardstock added as fat powder from melting, that the temperature of the emulsion obtained after step (g) is between 10 and 25°C, preferably between 12 and 24°C, more preferably between 13 and 23°C, and most preferably 14 to 22°C. The fat powder is usually added at a temperature of 10-25°C, so the temperature of the mix of liquid oil and liquid hardstock has to be chosen such that this is achieved.

Preferably the temperature of the water-phase at step g) is from 1 to 25°, more preferably from 2 to 20°C and even more preferably from 4 to 15°C. It is believed that at said preferred temperature ranges a more optimal and/or continuous fat-crystal network is created and melting of a substantial part of the fat powder is prevented.

The ingredients at step e) and step f) of the process according to the invention may be mixed using standard mixing, preferably high shear mixing. Care should be taken that the mixing does not raise the temperature unduly. The mixing of the water phase and the oil containing both liquid hardstock and fat powder is suitably done in a C-unit, as is known in margarine and spread processing (e.g. a pin-stirrer).

The process according to the present invention preferably is done without processing in a votator A-unit (a scraped surface heat exchanger), as such processing has disadvantages, e.g. that such is energy intensive.

### Measurements

The Stevens value of a W/O emulsion according to the invention is determined as follows:
A product, whereof the Stevens-value is to be measured is stabilized at 5 degrees Celsius. The hardness of the product is measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. The probe is pushed into the product at a speed of 2 mm/s, a trigger force of 5 gram from a distance of 10 mm. The force required is read from the digital display and is expressed in grams.

Preferably the emulsion according to the invention has a Stevens-value below 300, more preferably below 250, even more preferably below 220, most preferably below 200. It is preferred that the Stevens value of the spreads according to the present invention have a Stevens value of from 80 to 250, more preferably from 90 to 220, even more preferably 100 to 200 and still even more preferably of from 120 to 200. The values in this are measured after cycling.

Preferably the emulsion according to the invention has water droplet size distribution with a D3,3 from 12 to 3, more preferably from 8 to 3, even more preferably from to 6 to 3.2 and most preferably from 4.5 to 3.5.

Preferably the emulsion according to the invention has water droplet size distribution with an e-sigma of at most 2.2, more preferably at most 2.1, yet more preferably of at most 1.8, even more preferably of at most 1.6 and most preferably of at most 1.4.

Preferably, the products according to the present invention have no free water.

Preferably emulsions according to the invention spreads, more preferably low-fat spreads.
Preferably, the emulsion according to the present invention the total amount of fat is from 30 to 55%, preferably from 35 to 50%, more preferably from 40 to 50%, in weight % on total emulsion. As stated, the emulsions according to the present invention can be made without adding conventional emulsifiers such as mono- and/or diglycerides. Hence, in the emulsion according to the present invention (the composition and in the process for making such), it is preferred that the composition comprises less than 0.05 wt. %, preferably less than 0.01wt. %, more preferably less than 0.005 wt. %, most preferably less than 0.001wt. % of mono- and/or diglyceride, based on the total emulsion.

The invention is now illustrated by the following non limiting examples.

### Examples

### Stevens value

Stevens values give an indication about the hardness (also called firmness) of a product. The Stevens value is determined according to the following protocol.

Products are stabilized at 5 degrees Celsius. The hardness of the product is measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. the probe is pushed into the product at a speed of 2 mm/s, a trigger force of 5 gram from a distance of 10 mm. The force required is read from the digital display and is expressed in grams.

### Spreadibilitv

Spreadibility is determined according to the following protocol.

A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where the 4 refers to a product still having some spreading properties, but an unacceptable level of defects.

### Water droplet size distribution of spreads (D3,3 measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and a (e-sigma) is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution D3,3 (volume weighed geometric mean diameter) and a (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The droplet size of the spread is measured, according to the above described procedure, of a spread stabilized at 5 degrees Celsius right after production for one week. This gives the D3,3 after stabilization at 5 degrees Celsius.

### Example 1, 2, comparative

Two 40% fat spreads (40% fat by weight on the total formulation) without non-lecithin emulsifiers having the composition as in Table 1 were made according to the method as described below. With the same process, as comparative, a 40% fat spread was made with similar ingredients, but now further containing monoglyceride esters as emulsifier.

**Table 1, Spreads product formulation (wt. %).**

| **Ingredient** (wt% on total composition) | Example 1 | Example 2 | comparative |
|---|---|---|---|
| ¹erES48 powder (hardstock powder) | 4 | 4 | 4 |
| palm kernel oil (liquid hardstock, mp 30°C) | 4 | - | 4 |
| ²Dimodan HP/UJ | - | - | 0.038/0.013 |
| ³dfPOf (liquid hardstock) | - | 4 | - |
| ⁴BOLEC ZT (lecithin) | 0.2 | 0.2 | 0.2 |
| Colourant/flavours | minors | | minors |
| Bean oil | 32 | 32 | 32 |
| ⁵Demi-water (incl. acidifier) | balance | balance | balance |
| ⁶Salt | 1.8 | 1.8 | 1.8 |

| | | | |
|---|---|---|---|
| ¹The fat powder was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51. The fat powder consisted of an interesterified mixture of 65% dry fractionated palm oil stearin with an Iodine Value of 14 and 35% palm kernel oil (made by the process as set out in WO 2005/071053). ²Dimodan HP: molecularly distilled mono-diacylglyceride mixture derived from fully hardened palm oil (90% monoglyceride), ex Danisco. Dimodan UJ: unsaturated monoacyl glycerides from sunflower oil, ex Danisco. ³dfPOf is dry fractionated palm oil. ⁴Bolec ZT (Supplier: Unimills B.V., the Netherlands) is lecithin comprising 37 wt. % phosphatidylcholine, 19 wt. % phosphatidylethanolamine and 22 wt. % phosphatidylinositol. ⁵The pH of the water-phase was adjusted to 3.6 using lactic acid. ⁶wt. % based on total water-phase. | | | |

### Preparation of the fat phase

Cold oil (temperature about 9°C) was added to a stirring tank. Liquid hardstock (PK) was heated up to 75°C and added to the oil and mixed. The resulting temperature of the oil mixed with the stock solution was about 18 degrees Celsius. Lecithin (at about 55-60°C) was added and mixed in. Next, the erES48 fat powder was added to the oil and mixed-in under vacuum. The fat powder and oil mixture is mixed under high shear, using a reflux pipe until a slurry was obtained which appeared smooth and translucent. The maximum temperature increase observed due to mixing was about 21.5 degrees Celsius. Before being fed into the C-unit see below the temperature of the oil-slurry was about 20 degrees Celsius. The so-obtained fat phase was transported to the fat run tank.

### Preparation of the water phase

The water phase was prepared by dissolving the sodium chloride in the water and adjusting the pH to about 3.6 using 20 wt. % lactic acid solution. Before being fed into the C-unit, see below, the water-phase was cooled to about 5°C (6°C for example 1 and comparative, 4°C for example 2).

### Mixing the fat- and water phase

The fat feed and the water feed were pumped via a junction point into C-unit (supplier: Het Stempel) with an internal volume of 1.5 liter, with 1 row of 16 pins on the stator (outer wall) and 4 rows of either 8 or 9 pins (in total 34 pins) distributed over 4 times 90degrees on the rotor. Rpm of the C-unit for example 1: 2500, for example 2: 2250, for the comparative: 2250. The temperature of the emulsion after this mixing was: 20.7°C (example 1); 19.4°C (example 2); 21.1°C (comparative).

The resulting spreads (W/O emulsions) were collected into 250 ml tubs and stored at 5 degrees Celsius for one week until further treated and/or measured.

A part of the fat slurry and water phase as prepared above was used to produce a fat continuous spread containing 45% fat. This was done by feeding the fat phase and water phase, after post-dosing minors, to a C-unit (volume 1.5 I) operating at a flow-rate of 100 kg per hour and at 2500 rpm. Tubs were filled and stored at 5 degrees Celsius for a period of up to 1 week. After this storage period, the samples were subjected to cycle tests to test stability.

### Results

The droplet size distribution (D3,3 and e-sigma) of the manufactured spread was measured directly after production.
∘ After storage at 5 degrees Celsius for one week, samples of the spread of Example 1 were subjected to different heat-cycle tests:In the 'M2-cycle' spreads were stored for 1 day at 25 degrees Celsius, followed by 1 day at 5 degrees Celsius. Finally the spreads were stored for 1 day at 10 degrees Celsius before being measured (After M2-cycle, Table 2).
∘ In the 'C-cycle' spreads were stored for 2 days at 30 degrees Celsius, followed by 4 days at 15 degrees Celsius, followed by 1 day at 10 degrees Celsius before being measured (After C1-cycle, Table 2).

The droplet size distribution (D3,3 and e-sigma), Stevens value and spreading score
of the cycled spreads was measured.

**Table 2. Analysis of spreads after production and heat-cycle treatment.**

| | Example 1 (40% fat) | Example 2 (40% fat) | Comparative (40% fat) |
|---|---|---|---|
| **At production** | | | |
| D3,3 | 4.57 | 5.48 | 4.73 |
| e-sigma | 2.01 | 2.1 | 1.99 |

| **Spreads analysis after M2-cycle** | | | |
|---|---|---|---|
| D3,3 | n.d. | 8.0 | n.d. |
| e-sigma | n.d. | 2.74 | n.d. |
| Stevens value | 124 | 97.7 | 128 |
| Spreadability score | 1 | 1-2 | 1 |

| **Spreads analysis after C-cycle** | | | |
|---|---|---|---|
| D3,3 | 8.70 | n.d. | n.d. |
| e-sigma | 2.01 | n.d. | n.d. |
| Stevens value | 97 | n.d. | 103 |
| Spreadability score | 1-2 | n.d. | 1 |

| | | | |
|---|---|---|---|
| n.d.: not determined. | | | |

As can be seen, with the presently claimed process spreads can be manufactured without emulsifiers other than lecithin, and which spreads score well on droplet size, droplet size distribution, Stevens value and spreadability.

## Claims

1. Process for manufacturing edible fat-continuous emulsions comprising 25 to 60 wt. % of total fat by weight % on total emulsion and 40 to 75 wt. % of a dispersed water-phase by weight % on total emulsion, said process comprising the steps of:
a) providing a water-phase;
b) providing liquid oil;
c) providing fat powder comprising hardstock fat;
d) providing hardstock fat in liquid form;
e) mixing liquid oil which is at a temperature of 1-15°C with 0.3-20% by weight on total fat of the emulsion of the hardstock fat in liquid form , said hardstock fat being at a temperature above its melting point;
f) mixing the product of e) which is at a temperature of 10-30°C with 3-20% by weight based on total fat of the emulsion of the fat powder comprising hardstock fat to obtain a fat slurry;
g) mixing the oil-slurry obtained by step f) with the water-phase to provide a water-in-oil emulsion;
wherein the amount of non-lecithin emulsifier in the emulsion is less than 0.1 wt. %, based on weight of the total emulsion, and wherein the composition further comprises lecithin and/or a lecithin derivative in an amount of 0.05 to 0.4% by weight based on the total emulsion, and wherein the fat powder used is micronized fat powder.

2. Process according to claim 1, wherein the fat powder is a fat powder obtainable by supercritical melt micronisation.

3. Process according to claim 1 or claim 2, wherein the temperature of the oil + liquid hardstock after step e) is from 5 to 25°C, preferably from 8 to 23°C and more preferably from 10 to 22°C.

4. Process according to any one of claims 1 to 3, wherein the temperature of the emulsion obtained after step (g) is between 10 and 25°C, preferably between 12 and 24°C, more preferably between 13 and 23°C, and most preferably 14 to 22°C.

5. Process according to any one of claims 1 to 4, wherein the total amount of fat is from 30 to 55%, preferably from 35 to 50%, more preferably from 40 to 50%, in weight % on total emulsion.

6. Process according to any of claims 1 to 5, wherein the total amount of hardstock fat is from 5 to 30 wt. %, preferably from 7 to 25 wt. %, more preferably from 8 to 22 wt. % by weight, based on the total fat phase.

7. Process according to any one of claims 1 to 6, wherein the amount of fat powder comprising hardstock fat which is added is from 5 to 15 wt. %, preferably from 8 to 12 wt. %, based on the weight of total fat phase.

8. Process according to any one of claims 1 to 7, wherein the amount of hardstock fat that is added in liquid form is from 0.5 to 15 wt. %, preferably from 1 to 14 wt. %, more preferably from 2 to 12 wt. % and even more preferably from 2 to 10 wt. %, based on the weight of total fat phase.

9. Process according to any of claims 1 to 8, wherein the amount of non-lecithin emulsifier in the emulsion is less than 0.05 wt. %, preferably less than 0.01wt. %, more preferably less than 0.005 wt. %, most preferably less than 0.001wt. % based on the total emulsion.

10. Process according to any one of claims 1 to 9, wherein the emulsion comprises lecithin and/or a lecithin derivative in an amount of between 0.07 and 0.35 wt. %, preferably 0.1 and 0.3 wt. % based on weight of the total emulsion.

11. Process according to any of claims 1 to 10, wherein the emulsion comprises less than 0.05 wt. % protein, preferably less than 0.01 wt. % protein, even more preferably less than 0.005wt. % protein, based on the total emulsion.

12. Process according to any of claims 1 to 11, wherein the emulsion comprises less than 0.1 wt. % of thickener or hydrocolloid, preferably less than 0.05wt. % of hydrocolloid, by weight based on the total formulation, based on the total emulsion.

13. Edible fat-continuous emulsion obtainable by the process of any of claims 1 to 12, which emulsion comprises:
- 25 to 60 wt. % of total fat, based on the total emulsion;
- 40 to 75 wt. % of a dispersed water-phase, based on the total emulsion;
- 0.05 to 0.4 wt. % lecithin and/or a lecithin derivative, preferably between 0.07 and 0.35 wt. %, based on the total emulsion;
- less than 0.05 wt. % protein, preferably less than 0.01 wt. % protein, even more preferably less than 0.005wt. % protein, based on the total emulsion;
- less than 0.1 wt. % of thickener or hydrocolloid, preferably less than 0.05wt. % of thickener or hydrocolloid, based on the total emulsion;
- less than 0.05 wt. % of a non-lecithin emulsifier, based on the total emulsion,
and wherein the emulsion is a spread having a Stevens value below 250, preferably below 220, more preferably below 200.

14. Emulsion according to claim 13, wherein the total amount of fat is from 30 to 55%, preferably from 35 to 50%, more preferably from 40 to 50%, in weight % on total emulsion.

15. Emulsion according to claim 13 or 14, wherein the emulsion comprises less than 0.05 wt. %, preferably less than 0.01wt. %, more preferably less than 0.005 wt. %, most preferably less than 0.001wt. % of mono- and/or diglyceride, based on the total emulsion.

## Patentansprüche

1. Verfahren zur Herstellung essbarer fettkontinuierlicher Emulsionen, umfassend 25 bis 60 Gew.-% gesamtes Fett, Gewichts-% bezogen auf die gesamte Emulsion, und 40 bis 75 Gew.-% einer dispergierten Wasser-Phase, Gewicht-% bezogen auf die gesamte Emulsion, wobei das Verfahren die Schritte umfasst:
a) Bereitstellen einer Wasser-Phase,
b) Bereitstellen von flüssigem Öl,
c) Bereitstellen von Fettpulver, umfassend Hardstock-Fett,
d) Bereitstellen von Hardstock-Fett in flüssiger Form,
e) Mischen des flüssigen Öls, welches sich auf einer Temperatur von 1-15°C befindet, mit 0,3-20 Gewichts-% des Hardstock-Fetts in flüssiger Form, bezogen auf das gesamte Fett der Emulsion, wobei sich das Hardstock-Fett auf einer Temperatur oberhalb seines Schmelzpunktes befindet,
f) Mischen des Produkts von e), das sich auf einer Temperatur von 10-30°C befindet, mit 3-20 Gewichts-%, bezogen auf das gesamte Fett der Emulsion, an dem Fettpulver, umfassend Hardstock-Fett, um eine Fettaufschlämmung zu erhalten,
g) Mischen der Öl-Aufschlämmung, erhalten durch Schritt f), mit der Wasser-Phase, um eine Wasser-in-ÖI-Emulsion zu erhalten,
wobei die Menge von Nicht-Lecithin-Emulgator in der Emulsion weniger als 0,1 Gew.-%, bezogen auf das Gewicht der gesamten Emulsion, beträgt und wobei die Zusammensetzung ferner Lecithin und/oder ein Lecithin-Derivat in einer Menge von 0,05 bis 0,4 Gewichts-%, bezogen auf die gesamte Emulsion, umfasst und wobei das verwendete Fettpulver mikronisiertes Fettpulver darstellt.

2. Verfahren nach Anspruch 1, wobei das Fettpulver ein Fettpulver ist, das durch überkritische Schmelzmikronisierung erhältlich ist.

3. Verfahren nach Anspruch 1 oder Anspruch 2, wobei die Temperatur des Öls + flüssigen Hardstocks nach Schritt e) von 5 bis 25°C, vorzugsweise von 8 bis 23°C und bevorzugter von 10 bis 22°C beträgt.

4. Verfahren nach irgendeinem der Ansprüche 1 bis 3, wobei die Temperatur der Emulsion, erhalten nach Schritt (g), zwischen 10 und 25°C, vorzugsweise zwischen 12 und 24°C, bevorzugter zwischen 13 und 23°C und höchst bevorzugt zwischen 14 und 22°C liegt.

5. Verfahren nach irgendeinem der Ansprüche 1 bis 4, wobei die Gesamtmenge des Fetts von 30 bis 55%, vorzugsweise von 35 bis 50%, bevorzugter von 40 bis 50%, in Gewichts-% der gesamten Emulsion, beträgt.

6. Verfahren nach einem der Ansprüche 1 bis 5, wobei die Gesamtmenge des Hardstock-Fetts von 5 bis 30 Gew.-%, vorzugsweise von 7 bis 25 Gew.-%, bevorzugter von 8 bis 22 Gew.-%, bezogen auf das Gewicht der gesamten Fettphase, beträgt.

7. Verfahren nach irgendeinem der Ansprüche 1 bis 6, wobei die Menge des Fettpulvers, umfassend Hardstock-Fett, welches zugegeben wird, von 5 bis 15 Gew.-%, vorzugsweise von 8 bis 12 Gew.-%, bezogen auf das Gewicht der gesamten Fettphase, beträgt.

8. Verfahren nach irgendeinem der Ansprüche 1 bis 7, wobei die Menge des Hardstock-Fetts, das in flüssiger Form hinzugegeben wird, von 0,5 bis 15 Gew.-%, vorzugsweise von 1 bis 14 Gew.-%, bevorzugter von 2 bis 12 Gew.-% und sogar bevorzugter von 2 bis 10 Gew.-%, bezogen auf das Gewicht der gesamten Fettphase, beträgt.

9. Verfahren nach einem der Ansprüche 1 bis 8, wobei die Menge an Nicht-Lecithin-Emulgator in der Emulsion weniger als 0,05 Gew.-%, vorzugsweise weniger als 0,01 Gew.-%, bevorzugter weniger als 0,005 Gew.-%, höchst bevorzugt weniger als 0,001 Gew.-%, bezogen auf die gesamte Emulsion, beträgt.

10. Verfahren nach irgendeinem der Ansprüche 1 bis 9, wobei die Emulsion Lecithin und/oder ein Lecithin-Derivat in einer Menge zwischen 0,07 und 0,35 Gew.-%, vorzugsweise zwischen 0,1 und 0,3 Gew.-%, bezogen auf das Gewicht der gesamten Emulsion, umfasst.

11. Verfahren nach einem der Ansprüche 1 bis 10, wobei die Emulsion weniger als 0,05 Gew.-% Protein, vorzugsweise weniger als 0,01 Gew.-% Protein, sogar bevorzugter weniger als 0,005 Gew.-% Protein, bezogen auf die gesamte Emulsion, umfasst.

12. Verfahren nach einem der Ansprüche 1 bis 11, wobei die Emulsion weniger als 0,1 Gew.-% Verdickungsmittel oder Hydrokolloid, vorzugsweise weniger als 0,05 Gew.-% Hydrokolloid, in Gewicht bezogen auf die gesamte Formulierung, bezogen auf die gesamte Emulsion, umfasst.

13. Essbare fettkontinuierliche Emulsion, erhältlich durch das Verfahren nach einem der Ansprüche 1 bis 12, wobei die Emulsion umfasst:
- 25 bis 60 Gew.-% gesamtes Fett, bezogen auf die gesamte Emulsion,
- 40 bis 75 Gew.-% einer dispergierten Wasser-Phase, bezogen auf die gesamte Emulsion,
- 0,05 bis 0,4 Gew.-% Lecithin und/oder eines Lecithin-Derivats, vorzugsweise zwischen 0,07 und 0,35 Gew.-%, bezogen auf die gesamte Emulsion,
- weniger als 0,05 Gew.-% Protein, vorzugsweise weniger als 0,01 Gew.-% Protein, sogar bevorzugter weniger als 0,005 Gew.-% Protein, bezogen auf die gesamte Emulsion,
- weniger als 0,1 Gew.-% Verdickungsmittel oder Hydrokolloid, vorzugsweise weniger als 0,05 Gew.-% Verdickungsmittel oder Hydrokolloid, bezogen auf die gesamte Emulsion,
- weniger als 0,05 Gew.-% eines Nicht-Lecithin-Emulgators, bezogen auf die gesamte Emulsion,
und worin die Emulsion einen Aufstrich darstellt, der einen Stevens-Wert unter 250, vorzugsweise unter 220, bevorzugter unter 200 aufweist.

14. Emulsion nach Anspruch 13, wobei die gesamte Menge des Fetts von 30 bis 55%, vorzugsweise von 35 bis 50%, bevorzugter von 40 bis 50%, in Gewichts-% der gesamten Emulsion, beträgt.

15. Emulsion nach Anspruch 13 oder 14, wobei die Emulsion weniger als 0,05 Gew.-%, vorzugsweise weniger als 0,01 Gew.-%, bevorzugter weniger als 0,005 Gew.-%, höchst bevorzugt weniger als 0,001 Gew.-% Mono- und/oder Diglycerid, bezogen auf die gesamte Emulsion, umfasst.

## Revendications

1. Procédé de fabrication d'émulsions continues de graisses comestibles comprenant de 25 à 60 % en masse de graisse totale en % en masse sur l'émulsion totale et de 40 à 75 % en masse d'une phase d'eau dispersée en % en masse sur l'émulsion totale, ledit procédé comprenant les étapes de :
a) fourniture d'une phase d'eau ;
b) fourniture d'huile liquide ;
c) fourniture de poudre de graisse comprenant de la graisse dure ;
d) fourniture de graisse dure dans une forme liquide ;
e) mélange d'huile liquide qui est à une température de 1-15°C avec 0,3-20 % en masse sur la graisse totale de l'émulsion de la graisse dure dans une forme liquide, ladite graisse dure étant à une température supérieure à son point de fusion ;
f) mélange du produit e) qui est à une température de 10-30°C avec 3-20 % en masse rapporté à la graisse totale de l'émulsion de la poudre de graisse comprenant de la graisse dure pour obtenir une suspension de graisse ;
g) mélange de la suspension d'huile obtenue par l'étape f) avec la phase d'eau pour fournir une émulsion eau-dans-huile ;
où la quantité d'émulsionnant de non-lécithine dans l'émulsion est inférieure à 0,1 % en masse, rapporté à la masse de l'émulsion totale, et où la composition comprend de plus de la lécithine et/ou un dérivé de lécithine dans une quantité de 0,05 à 0,4 % en masse rapporté à l'émulsion totale, et où la poudre de graisse utilisée est de la poudre de graisse micronisée.

2. Procédé selon la revendication 1, où la poudre de graisse est une poudre de graisse pouvant être obtenue par une micronisation à l'état de fusion supercritique.

3. Procédé selon la revendication 1 ou la revendication 2, où la température de l'huile + graisse dure liquide après l'étape e) est de 5 à 25°C, de préférence de 8 à 23°C et encore mieux de 10 à 22°C.

4. Procédé selon l'une quelconque des revendications 1 à 3, où la température de l'émulsion obtenue après l'étape (g) est de 10 à 25°C, de préférence de 12 à 24°C, encore mieux de 13 à 23°C, et bien mieux encore de 14 à 22°C.

5. Procédé selon l'une quelconque des revendications 1 à 4, où la quantité totale de graisse est de 30 à 55 %, de préférence de 35 à 50 %, encore mieux de 40 à 50 %, en % en masse sur l'émulsion totale.

6. Procédé selon l'une quelconque des revendications 1 à 5, où la quantité totale de graisse dure est de 5 à 30 % en masse, de préférence de 7 à 25 % en masse, encore mieux de 8 à 22 % en masse, rapporté à la phase de graisse totale.

7. Procédé selon l'une quelconque des revendications 1 à 6, où la quantité de poudre de graisse comprenant de la graisse dure qui est ajoutée est de 5 à 15 % en masse, de préférence de 8 à 12 % en masse, rapporté à la masse de phase de graisse totale.

8. Procédé selon l'une quelconque des revendications 1 à 7, où la quantité de graisse dure qui est ajoutée dans une forme liquide est de 0,5 à 15 % en masse, de préférence de 1 à 14 % en masse, encore mieux de 2 à 12 % en masse et bien mieux encore de 2 à 10 % en masse, rapporté à la masse de la phase de graisse totale.

9. Procédé selon l'une quelconque des revendications 1 à 8, où la quantité d'émulsionnant de non-lécithine dans l'émulsion est inférieure à 0,05 % en masse, de préférence inférieure à 0,01 % en masse, encore mieux inférieure à 0,005 % en masse, bien mieux encore inférieure à 0,001 % en masse, rapporté à l'émulsion totale.

10. Procédé selon l'une quelconque des revendications 1 à 9, où l'émulsion comprend de la lécithine et/ou un dérivé de lécithine dans une quantité de 0,07 à 0,35 % en masse, de préférence de 0,1 à 0,3 % en masse, rapporté à la masse de l'émulsion totale.

11. Procédé selon l'une quelconque des revendications 1 à 10, où l'émulsion comprend moins de 0,05 % en masse de protéine, de préférence moins de 0,01 % en masse de protéine, encore mieux moins de 0,005 % en masse de protéine, rapporté à l'émulsion totale.

12. Procédé selon l'une quelconque des revendications 1 à 11, où l'émulsion comprend moins de 0,1 % en masse d'épaississant ou d'hydrocolloïde, de préférence moins de 0,05 % en masse d'hydrocolloïde, en masse rapporté à la formulation totale, rapporté à l'émulsion totale.

13. Emulsion continue de graisse comestible pouvant être obtenue par le procédé selon l'une quelconque des revendications 1 à 12, laquelle émulsion comprend :
- de 25 à 60 % en masse de graisse totale, rapporté à l'émulsion totale ;
- de 40 à 75 % en masse d'une phase d'eau dispersée, rapporté à l'émulsion totale ;
- de 0,05 à 0,4 % en masse de lécithine et/ou d'un dérivé de lécithine, de préférence de 0,07 à 0,35 % en masse, rapporté à l'émulsion totale ;
- moins de 0,05 % en masse de protéine, de préférence moins de 0,01 % en masse protéine, encore mieux moins de 0,005 % en masse de protéine, rapporté à l'émulsion totale ;
- moins de 0,1 % en masse d'épaississant ou d'hydrocolloïde, de préférence moins de 0,05 % en masse d'épaississant ou d'hydrocolloïde, rapporté à l'émulsion totale ;
- moins de 0,05 % en masse d'un émulsionnant de non-lécithine, rapporté à l'émulsion totale,
et où l'émulsion est une pâte à tartiner ayant une valeur Stevens inférieure à 250, de préférence inférieure à 220, encore mieux inférieure à 200.

14. Emulsion selon la revendication 13, où la quantité totale de graisse est de 30 à 55 %, de préférence de 35 à 50 %, encore mieux de 40 à 50 %, en % en masse sur l'émulsion totale.

15. Emulsion selon la revendication 13 ou 14, où l'émulsion comprend moins de 0,05 % en masse, de préférence moins de 0,01 % en masse, encore mieux moins de 0,005 % en masse, bien mieux encore moins de 0,001 % en masse de mono- et/ou diglycéride, rapporté à l'émulsion totale.
